# EUROPÄISCHE PATENTSCHRIFT

(11) **EP 0 626 509 B1**
(45) Veröffentlichungstag und Bekanntmachung des Hinweises auf die Patenterteilung: **17.07.1996**
(21) Anmeldenummer: 94107413.0
(22) Anmeldetag: 13.05.1994
(51) Int. Cl.: F02B 31/00

(54) **Brennkraftmaschine mit je einem Doppeleinlasskanal für jeweils einem Zylinderraum zuzuführendes Gas**
Internal combustion engine with a double intake passage for a gas to be supplied to a cylinder
Moteur à combustion interne avec un conduit d'admission double d'un gas à introduire dans un cylindre

(30) Priorität: 26.05.1993 DE 4317433
(43) Veröffentlichungstag der Anmeldung: 30.11.1994
(73) Patentinhaber: ADAM OPEL AG, D-65423 Rüsselsheim (DE)
(72) Erfinder: Grebe, Uwe Dieter, Dipl.-Ing., D-65468 Trebur (DE)
(74) Vertreter: Bergerin, Ralf, Dipl.-Ing.

(56) Entgegenhaltungen:
- DE-A- 3 936 263
- PATENT ABSTRACTS OF JAPAN vol. 9, no. 238 (M-416) (1961) 25. September 1985 & JP-A-60 093 122 (YANMAR DIESEL K.K.) 24. Mai 1985

## Beschreibung

Die Erfindung bezieht sich auf eine Brennkraftmaschine in einer Ausbildung gemäß dem Oberbegriff des Anspruches 1.

Bei bekannten Brennkraftmaschinen dieser Art soll erreicht werden, daß eine gesteuerte Gaszufuhr über zwei Einlaßventile an einen Zylinderraum erfolgt. Je nach Betriebszustand der Brennkraftmaschine kann es aber günstig sein, wenn die Gaszufuhr nur über eines der Einlaßventile erfolgt. Dies kann beispielsweise bei geringer Motordrehzahl sinnvoll sein. Soll ein großes Gasvolumen in kurzer Zeit zugeführt werden, ist es günstig über einen großen Querschnitt eines Doppeleinlaßkanales beiden Einlaßventilen Gas zuzuführen. Je nach Art und Weise der Gaszuführung verändern sich auch die die Verwirbelung des Gases betreffenden Verhältnisse im Zylinderraum und damit der Verbrennungsverlauf.

Aus der JP 60-93122 (A) ist eine Brennkraftmaschine mit zwei Einlaßventilen pro Zylinder und einem Einlaßkanal bekannt. Der Einlaßkanal weist einen sich zu den Einlaßventilen hin öffnenden Querschnitt auf, was strömungstechnisch ungünstig ist. Im Einlaßkanal ist ein Walzendrehschieber gelagert. Ein Hauptgasstrom wird auf ein Einlaßventil gerichtet. Der Walzendrehschieber hat eine seitliche Öffnung, über die je nach Stellung des Walzendrehschiebers auch dem zweiten Einlaßventil Gas zugeführt wird. Bei hohem Gasbedarf muß das Gas durch den relativ geringen Querschnitt des Walzendrehschiebers gesaugt werden, wobei dieser selbst einen Widerstand für das strömende Gas darstellt. Es ist ein schlechter Wirkungsgrad der Gaszuführung zu erwarten.

Eine weitere Brennkraftmaschine ist bekannt, die in der DE 39 36 263 A1 beschrieben ist und ebenfalls einen Walzendrehschieber je Zylinder aufweist. Dieser Walzendrehschieber ist in einem Saugrohr im Bereich der Verbindung zu einem Doppeleinlaßkanal gelagert, wobei der Doppeleinlaßkanal vollständig in einen Primär- und einen Sekundärkanal unterteilt ist. Das Saugrohr ist etwa rechtwinklig zu dem Doppeleinlaßkanal angeordnet. Somit muß das strömende Gas stark umgelenkt werden, was Energieverluste zur Folge hat. Des weiteren ist hier mit einer stark inhomogenen Verteilung des Gases im Zylinderraum zu rechnen, was Nachteile bei der Verbrennung mit sich bringt.

Es sind auch andere Mittel zur gesteuerten Verteilung von einem Zylinderraum über zwei Einlaßöffnungen zuzuführenden Gas bekannt, die ebenfalls nachteilig sind. Beispielsweise ist es bekannt, den Gasstrom durch eine Klappe im Doppeleinlaßkanal umzulenken, wobei diese Klappe aber immer einen Strömungswiderstand darstellt und nachteilige Wirbel im Doppeleinlaßkanal verursacht.

Es ist Aufgabe der Erfindung, eine Brennkraftmaschine mit zwei Einlaßöffnungen pro Zylinder und einem zu diesen führenden Doppeleinlaßkanal zu schaffen, wobei es möglich sein soll, dem jeweils aktuellen Betriebszustand der Brennkraftmaschine entsprechend, Gas ohne wesentliche Strömungswiderstände im Doppeleinlaßkanal derart mit baulich einfachen Mitteln dem Zylinderraum zuzuführen, daß entweder ein großer Volumenstrom durch einen großen Querschnitt des Doppeleinlaßkanals und beide Einlaßöffnungen oder ein kleiner Volumenstrom durch einen im Querschnitt verringerten Kanal und nur eine Einlaßöffnung geführt wird. Dabei soll eine dem Betriebszustand entsprechende gute Verwirbelung des Gases im Zylinderraum erfolgen und gasdynamische Wirkungen sollen prozeßoptimierend ausgenutzt werden.

Zur Lösung dieser Aufgabe zeichnet sich die erfindungsgemäße Brennkraftmaschine durch die Merkmale des kennzeichnenden Teils des Anspruches 1 aus. Die weitere Ausgestaltung der Erfindung ergibt sich aus den Ansprüchen 2 bis 11.

Die Brennkraftmaschine weist Zylinder auf, denen über zwei Einlaßöffnungen, die von Einlaßventilen geöffnet oder verschlossen werden, Gas zuzuführen ist. Ein Doppeleinlaßkanal führt zu den Einlaßöffnungen, wobei sein Querschnitt und seine Lage in einem Zylinderkopf so gewählt sind, daß an beiden Einlaßöffnungen annähernd gleiche Strömungsverhältnisse vorliegen. Der Doppeleinlaßkanal steht in Verbindung mit einem Saugrohr, über das das Gas, insbesondere Luft oder Kraftstoff-Luft-Gemisch, zugeführt wird. Die Querschnittsfläche des Doppeleinlaßkanals ist auf den maximalen Gasbedarf der Brennkraftmaschine ausgelegt. Bei hohen Motordrehzahlen wird das Gas mit hoher Strömungsgeschwindigkeit durch beide Einlaßöffnungen angesaugt und verwirbelt im Zylinderraum, wobei die Wirbel vorwiegend parallel zu einer Zylinderachse ausgerichtet sind. Dies ist der Fall, da sich radiale Komponenten der beiden durch die Einlaßöffnungen geführten Gasströme gegenseitig nahezu aufheben.

Der Doppeleinlaßkanal hat eine Querschnittsfläche, die sich aus zwei sich schneidenden oder aneinander grenzenden Kreisen zusammensetzt. Damit sind seitliche Begrenzungswände des Doppeleinlaßkanals annähernd zylinderförmig ausgebildet. Es kann vorgesehen sein, daß sich der Doppeleinlaßkanal in Richtung der Einlaßöffnungen leicht verjüngt. Dadurch wird zuströmendes Gas leicht beschleunigt, was strömungstechnisch günstig ist. Im Bereich der Einlaßöffnungen ist der Doppeleinlaßkanal durch ein Trennelement, das Bestandteil des Zylinderkopfes ist, in einen Primär- und einen Sekundärkanal unterteilt. Jeder dieser Kanäle führt zu einer Einlaßöffnung. Durch das Trennelement wird der dem Zylinderraum zuzuführende Gasstrom geteilt.

Im Doppeleinlaßkanal, bevorzugt auf der Seite des Primärkanals, ist ein Walzendrehschieber angeordnet. Dieser Walzendrehschieber ist um eine Achse verdrehbar gelagert, wobei die Achse etwa in Strömungsrichtung des angesaugten Gases verläuft. Der Walzendrehschieber ist dünnwandig so geformt, daß er die Innenwandung des Doppeleinlaßkanals bereichsweise nachbildet und weist eine große seitliche Öffnung auf, die sich vom Saugrohr her bis in den Bereich der Einlaßöffnung erstreckt. Diese Öffnung kann auch durchgehend sein, so daß die Querschnittsfläche des Walzendrehschiebers von zwei Kreisbogenabschnitten mit gleichem Mittelpunkt begrenzt wird. Die Achse des Walzendrehschiebers verläuft dann durch diesen Mittelpunkt.

Der Walzendrehschieber ist aus einer Auf-Stellung in eine Zu-Stellung und umgekehrt überführbar. In der Auf-Stellung ist die Öffnung des Walzendrehschiebers in Richtung des Zentrums des Doppeleinlaßkanals ausgerichtet. Die Mantelfläche des Walzendrehschiebers liegt nahezu vollflächig an der Innenwandung des Doppeleinlaßkanals an. Damit ist der Walzendrehschieber funktionslos im Doppeleinlaßkanal angeordnet. Gas kann über die vollen Querschnittsfläche des Doppeleinlaßkanals zugeführt werden, ohne daß es durch Abschnitte des Walzendrehschiebers zu Verwirbelungen im Doppeleinlaßkanal kommt. Das Gas kann bei geöffneten Einlaßventilen durch beide Einlaßöffnungen in den Zylinderraum eintreten. Die Brennkraftmaschine erreicht damit ihr maximales Drehmoment bei relativ hoher Drehzahl.

Um den Walzendrehschieber in die Zu-Stellung zu überführen, wird er um seine Achse verdreht, bis sich seine Öffnung im Bereich der Innenwandung des Doppeleinlaßkanals befindet und damit verschlossen ist. Durch die Mantelfläche des Walzendrehschiebers wird der Doppeleinlaßkanal jetzt über seine gesamte Länge in einen Primär- und einen Sekundärkanal unterteilt. Der Primärkanal hat etwa einen Kreis zur Querschnittsfläche.

Etwa quer zu der Achse des Walzendrehschiebers beweglich ist ein Flachschieber im Bereich des saugrohrseitigen Endes des Doppeleinlaßkanals gelagert. Der Flachschieber ist derart ausgebildet, daß durch ihn der Sekundärkanal zum Saugrohr hin verschließbar ist. Er hat also bereichsweise eine Form, die der Querschnittsfläche des Sekundärkanals in etwa entspricht. Befindet sich der Walzendrehschieber in der Zu-Stellung und nimmt der Flachschieber ebenfalls die Zu-Stellung ein, verschließt also den Sekundärkanal, kann dem Zylinderraum nur noch über eine Einlaßöffnung Gas zugeführt werden. Da der Gaszufluß über die zweite Einlaßöffnung unterbunden ist, wird das Gas im Zylinderraum jetzt auch verstärkt radial um die Zylinderachse verwirbelt. Befinden sich Walzendrehschieber und Flachschieber in der Zu-Stellung, erreicht die Brennkraftmaschine ihr maximales Drehmoment bei relativ geringer Drehzahl.

Die Verdrehung des Walzendrehschiebers und die Verschiebung des Flachschiebers folgt gesteuert in Abhängigkeit von Betriebskennwerten der Brennkraftmaschine und eventuell auch von Fahrzeugkennwerten. Dazu sind Stellmittel vorgesehen. Diese Stellmittel sind verschieden ausführbar. Es kann vorgesehen sein, den Flachschieber gleichzeitig mit der Verdrehung des Walzendrehschiebers zu bewegen. Die Bewegung des Flachschiebers kann aber auch unabhängig von der des Walzendrehschiebers erfolgen. Es kann sinnvoll sein, erst die Flachschieber in die Zu-Stellung zu überführen und den Walzendrehschieber noch in der Auf-Stellung zu belassen. Damit würde Gas zwar noch über beide Einlaßöffnungen zugeführt werden, aber diese Gaszuführung würde unsymmetrisch und zwar verstärkt über die Einlaßöffnung des Primärkanals erfolgen. Bei konstanter Beibehaltung dieser Art der Gaszuführung würde das maximale Drehmoment der Brennkraftmaschine etwa bei mittlerer Drehzahl erreicht werden.

Bei getrennten Stellmitteln für den Flachschieber und den Walzendrehschieber könnten diese bei ansteigender Drehzahl so angesteuert werden, daß zuerst der Walzendrehschieber in die Auf-Stellung verdreht wird und dann der Flachschieber in die Auf-Stellung verschoben wird. Bei abfallender Drehzahl würde zuerst der Flachschieber und dann der Walzendrehschieber in die Zu-Stellung überführt, wobei nicht die Drehzahl der Brennkraftmaschine allein ausschlaggebend für die vorzuwählende Stellung der Schieber ist. Auch der momentane Lastzustand ist von Bedeutung und Fahrzeugkennwerte (vorgewählter Gang; Fahrzeuggeschwindigkeit etc.) können Beachtung finden, wobei diese Kennwerte von einer Sensorik erfaßt, verarbeitet, in Steuersignale gewandelt und den Stellmitteln zugeführt werden.

Ist der Sekundärkanal vollständig durch den Walzendrehschieber und den Flachschieber verschlossen, treten gasdynamische Wirkungen in ganz anderer Weise auf als insbesondere bei geöffnetem Flachschieber. Durch die vorgewählte Lage des Flachschiebers können also zusätzliche positive Wirkungen beim Ladungswechsel erreicht werden. Hierbei ist auch die Art und Weise der Saugrohrausbildung von Bedeutung. Vorteilhaft ist es hier, das Saugrohr in zwei Kanäle zu unterteilen, wobei einer dieser Kanäle im Primärkanal und der andere im Sekundärkanal des Doppeleinlaßkanales mündet. Die Saugrohrkanäle können hinsichtlich ihrer Länge und Querschnittsfläche unterschiedlich ausgebildet sein. Somit sind zwei wesentliche Vorteile erreichbar. Bei in der Zu-Stellung befindlichen Flachschieber kommt es vor dem Flachschieber zu keinen nachteiligen Verwirbelungen, wie dies bei einem einkanaligen Saugrohr der Fall wäre. Das Gas kann optimal dem Primärkanal des Doppeleinlaßkanales zugeführt werden. Durch die gezielte Vorwahl der Länge und der Querschnittsfläche der beiden Saugrohrkanäle können gasdynamische Wirkungen bei verschiedenen Betriebszuständen der Brennkraftmaschine optimiert werden. Gleichzeitig mit der Verstellung des Walzendrehschiebers und des Flachschiebers, werden nicht nur die Verhältnisse im Doppeleinlaßkanal variiert, sondern es findet auch eine Veränderung der Saugrohrparameter (Querschnittsfläche, Länge, Strömungsgeschwindigkeit) statt, was mit positiven Wirkungen nutzbar ist.

Die Erfindung sieht im weiteren eine lageveränderbare Einspritzdüse je Doppeleinlaßkanal vor, die insbesondere dann zum Einsatz kommen kann, wenn die Brennkraftmaschine als Otto-Motor ausgebildet ist. Es ist bekannt, daß über Einspritzdüsen, die im Bereich des Doppeleinlaßkanals angeordnet sind, Kraftstoff in das angesaugte Gas (Luft) eingespritzt wird. Zur Erreichung einer gleichmäßigen Kraftstoffverteilung ist es von Vorteil, den Kraftstoff zentral in den angesaugten Gasstrom einzuspritzen. Bei einer ortsfesten Einspritzdüse im Zentrum des Doppeleinlaßkanals würde aber nur in der Auf-Stellung des Walzendrehschiebers Kraftstoff zentral in den Gasstrom eingespritzt werden. Bei in der Zu-Stellung befindlichem Walzendrehschieber könnte die Kraftstoffeinspritzung nur in dem Randbereich des Primärkanals erfolgen. Zur Beseitigung dieses Nachteils ist es vorgesehen, die Einspritzdüse ortsveränderbar zu haltern. So ist mit baulich einfachen Mitteln erreichbar, daß die Kraftstoffeinspritzung in der Auf-Stellung des Flachschiebers zentral in den Doppeleinlaßkanal und in der Zu-Stellung des Flachschiebers zentral in den Primärkanal erfolgt, in dem die Einspritzdüse in die jeweils richtige Position überführt wird.

Die Beschreibung weiterer Einzelheiten der Erfindung erfolgt anhand von Ausführungsbeispielen. In den dazugehörigen Zeichnungen stellen im einzelnen dar:
- Fig. 1:: Zylinderkopf einer Brennkraftmaschine in geschnittener, schematischer Darstellungsweise, wobei die Schnittebene durch eine Einlaßventilachse und die Achse eines Walzendrehschiebers verläuft;
- Fig. 2:: Sicht aus Richtung des Pfeils X in Figur 1 auf einen Doppeleinlaßkanal mit Walzendrehschieber und Flachschieber in der Auf-Stellung in schematischer Darstellungsweise;
- Fig. 3:: Sicht aus Richtung des Pfeils X in Figur 1 auf einen Doppeleinlaßkanal mit Walzendrehschieber und Flachschieber in der Zu-Stellung in schematischer Darstellungsweise;
- Fig. 4:: Sicht auf die Querschnittsfläche eines Doppeleinlaßkanals mit Walzendrehschieber und Flachschieber anderer Ausführung und mit einer Einspritzdüse im Bereich des Doppeleinlaßkanals in schematischer Darstellungsweise;
- Fig. 5:: Ansicht nach Figur 4 bei gewechselter Stellung des Walzendrehschiebers, Flachschiebers und der Einspritzdüse, wobei in den Figuren 2 bis 4 das Saugrohr und der Saugrohrflansch nicht dargestellt sind.

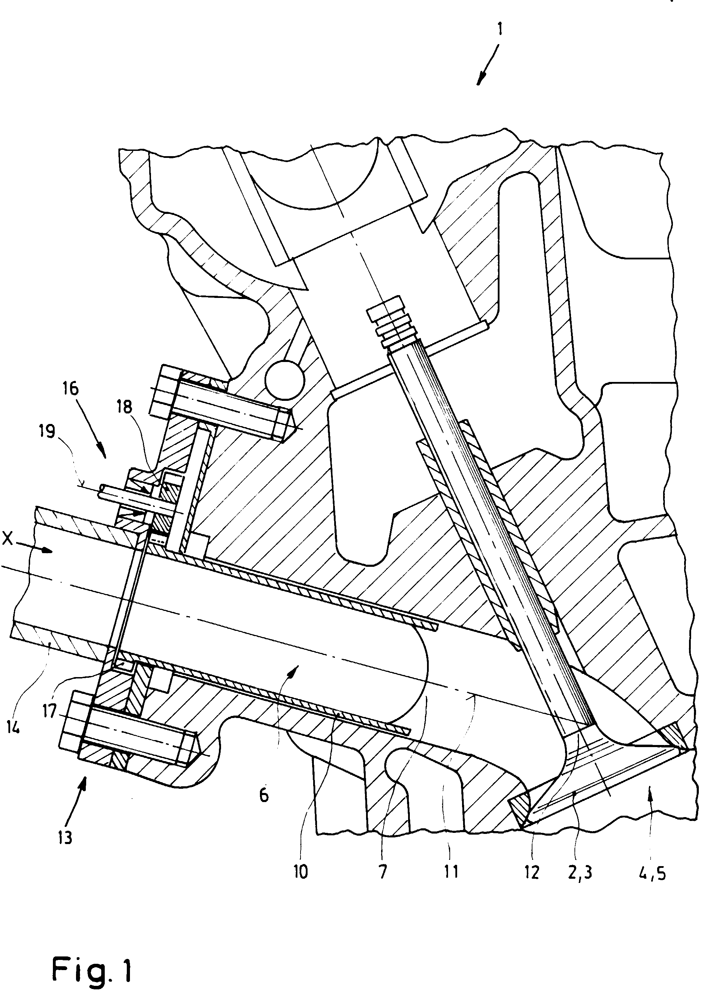

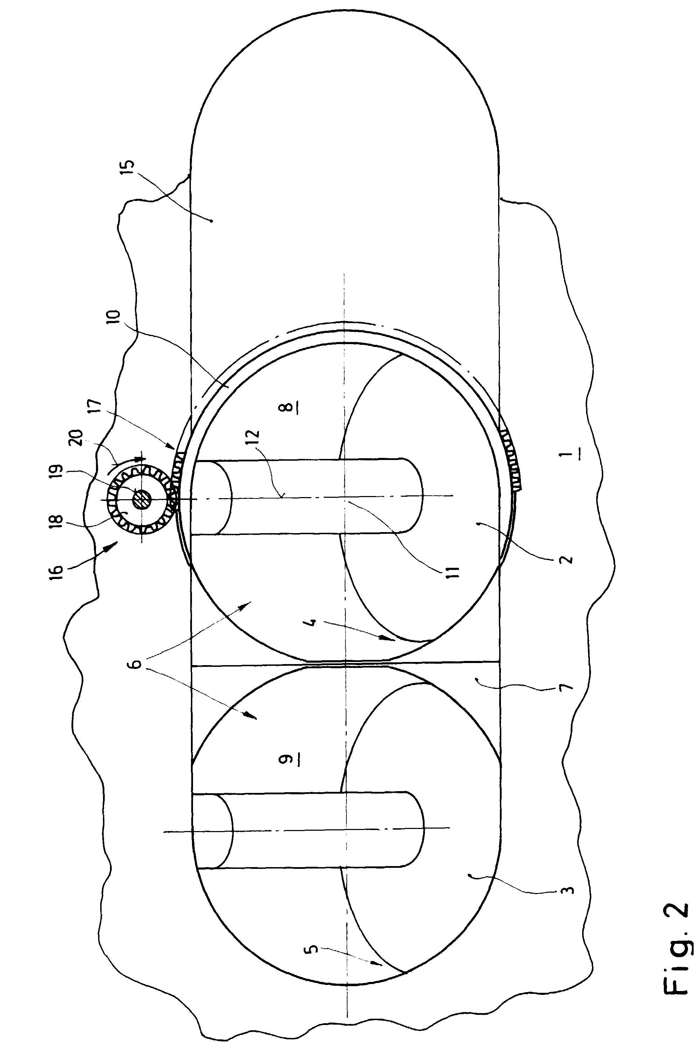

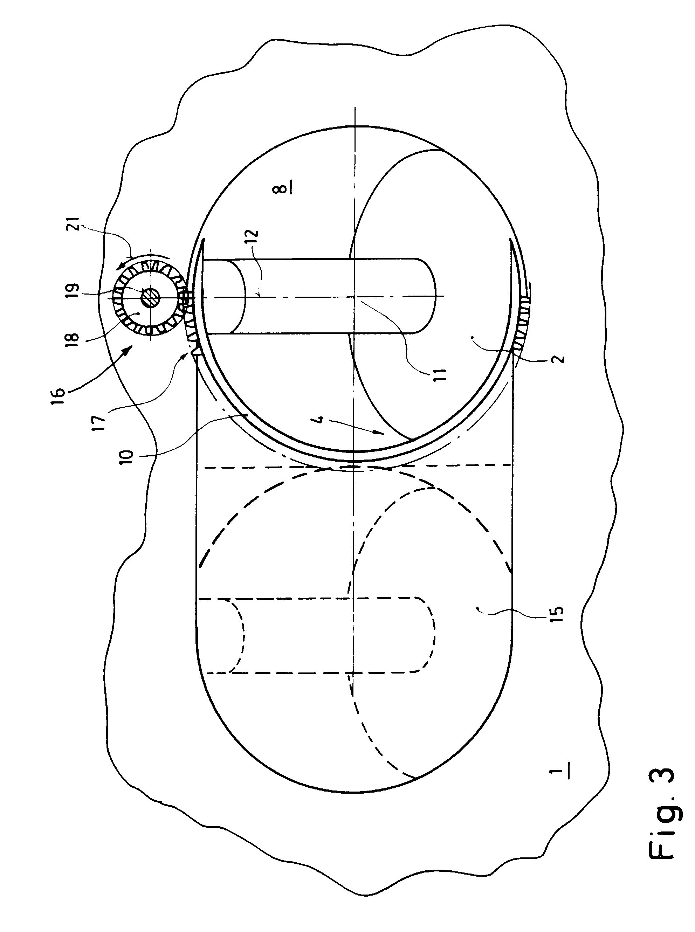

Aus Figur 1 wird der Grundaufbau eines Zylinderkopfes 1 einer Brennkraftmaschine deutlich, wobei hier nur Details bezüglich des Gaseinlaßsystems von Bedeutung sind. Ein vorderes Einlaßventil 2 ist in Figur 1 sichtbar, wobei insgesamt zwei Einlaßventile 2, 3 vorhanden sind, durch die Einlaßöffnungen 4, 5 gesteuert geöffnet oder verschlossen werden, wie dies allgemein bekannt ist. Der Zylinderkopf 1 beinhaltet einen Doppeleinlaßkanal 6 je Zylinder, durch den den Einlaßöffnungen 4, 5 Gas zuzuführen ist und durch die das Gas dann bei geöffneten Einlaßventilen 2, 3 in den Zylinderraum gelangt. Die Querschnittsfläche des Doppeleinlaßkanals 6 ist in den Figuren 2, 3 verdeutlicht. Sie setzt sich aus zwei Kreisflächen zusammen, die durch Anlegen von Tangenten eine Fläche bilden. Im Bereich der Einlaßöffnungen 4, 5 ist ein Trennelement, speziell eine Trennwand 7 angeordnet, die den Endbereich des Doppeleinlaßkanals 6 in einen Primärkanal 8 und einen Sekundärkanal 9 unterteilt. Im Doppeleinlaßkanal 6, speziell oberhalb des Primärkanals 8 ist ein Walzendrehschieber 10 um eine Achse 11 verdrehbar gelagert. Die Achse 11 schneidet eine Achse 12 des Einlaßventils 2 im Primärkanal 9. Der Walzendrehschieber 10 erstreckt sich etwa über eine Länge vom Anfangsbereich des Primärkanals 8 bis zu einer Flanschverbindung 13 zwischen dem Zylinderkopf 1 und einem Saugrohr 14. Die Querschnittsfläche des Walzendrehschiebers 10 hat etwa eine C-Form. Sie wird von zwei Kreisbogenabschnitten mit gleichem Mittelpunkt begrenzt, wobei dieser Mittelpunkt auf der Achse 11 liegt. Es handelt sich bei dem Walzendrehschieber 10 also um ein einseitig offenes, dünnwandiges Rohr. Der Außendurchmesser des Walzendrehschiebers 10 ist so gewählt, daß er die innere Mantelfläche des Doppeleinlaßkanals 6 bereichsweise nachbildet.

Der Walzendrehschieber 10 ist durch Drehung um die Achse 11 aus einer Auf-Stellung (Figur 2) in eine Zu-Stellung (Figur 3) und umgekehrt überführbar. In der Auf-Stellung weist die Öffnung des Walzendrehschiebers 10 in Richtung des Sekundärkanals 9. In dieser Position des Walzendrehschiebers 10 ist die volle Querschnittsfläche des Doppeleinlaßkanals 6 für die Gaszufuhr zum Zylinderraum nutzbar, ohne daß der Walzendrehschieber 10 einen Strömungswiderstand darstellt. Die Gaszufuhr erfolgt über beide Einlaßöffnungen 4, 5 in etwa gleicher Weise. Ist der Walzendrehschieber 10 in der Zu-Stellung, wird der Doppeleinlaßkanal 6 vollständig in den Primärkanal 8 und den Sekundärkanal 9 unterteilt. Die Wandung des Walzendrehschiebers 10 dient jetzt als Trennwand innerhalb des Doppeleinlaßkanals 6 und die Öffnung des Walzendrehschiebers 10 wird von der inneren Mantelfläche des Doppeleinlaßkanals 6 verschlossen.

Zusätzlich ist ein Flachschieber 15 vorgesehen, durch den der Sekundärkanal 9 zum Saugrohr 14 hin verschließbar ist. Die Form des Flachschiebers 15 wird von der Querschnittsfläche des Sekundärkanals 9 bestimmt, welche von der Wandung des Doppeleinlaßkanals 6 und dem Walzendrehschieber 10 begrenzt wird. Befinden sich der Walzendrehschieber 10 und der Flachschieber 15 in ihrer Zu-Stellung, kann dem Zylinderraum nur noch Gas über die im Primärkanal 8 befindliche Einlaßöffnung 4 zugeführt werden. Somit sind völlig andere Verhältnisse bei der Gaszufuhr gegeben als sie bei Nutzung des Doppeleinlaßkanals 6 in seinem vollen Querschnitt vorlagen. Dabei befinden sich im Primärkanal 8 keine Bauelemente, die zusätzliche Strömungswiderstände oder Verwirbelungen verursachen.

Es kann vorgesehen sein, daß der Walzendrehschieber 10 im Endbereich seiner Öffnung und nahe den Einlaßöffnungen eine Scheidewand enthält, was aber in den Figuren nicht gezeigt ist. Dies würde bei in Auf-Stellung befindlichem Walzendrehschieber 10 die Teilung des Gasstromes und die Weiterleitung an den Primärkanal 8 bzw. Sekundärkanal 9 beeinflussen. Unter diesen Umständen kann dann die Trennwand 7 im Zylinderkopf 1 entfallen, da deren Funktion von der Scheidewand des Walzendrehschiebers 10 übernommen wird.

Das Verdrehen des Walzendrehschiebers 10 um seine Achse 11 erfolgt über Stellmittel 16, wobei in dem in den Figuren 1 bis 3 gezeigten Ausführungsbeispiel auch gleichzeitig der Flachschieber 15 bewegt wird. Der Flachschieber 15 ist fest mit dem Walzendrehschieber 10 verbunden. Er ist an dem der Einlaßöffnung 4 abgewandten Ende des Walzendrehschiebers 10, gegenüber seiner Öffnung verschweißt. Der Walzendrehschieber 10 ist an seiner Stirnfläche mit einer Verzahnung 17 versehen, die sich über etwa 180° seines Umfangs erstreckt. Ein stirnradverzahntes Ritzel 18 steht im Eingriff mit der Verzahnung 17, wobei das Ritzel 18 über einen nicht in den Figuren gezeigten Stellmotor um eine Achse 19 in Rotation versetzbar ist. Zur Überführung des Walzendrehschiebers 10 und des Flachschiebers 15 in die Zu-Stellung rotiert das Ritzel 18 in Richtung des Pfeils 20. Zur Erreichung der AufStellung ist das Ritzel 18 in Richtung des Pfeils 21 anzutreiben. Der das Ritzel 18 antreibende Stellmotor wird durch Signale gesteuert, die abhängig sind von Betriebszuständen der Brennkraftmaschine bzw. auch des Fahrzeugs. Der Walzendrehschieber 10 und der Flachschieber 15 wird also in Abhängigkeit von diesen Kennwerten in die Auf- bzw. in die Zu-Stellung überführt. Als Kennwerte kommen insbesondere der Motorlastzustand, die Motordrehzahl, Motortemperatur, die Laständerungsgeschwindigkeit, die Fahrzeuggeschwindigkeit und eventuell auch der vorgewählte Gang in Betracht. Diese Daten werden in einem Rechner verarbeitet und in Abhängigkeit vom Ergebnis dieser Verarbeitung werden die Steuersignale für den Stellmotor ausgegeben. Somit ist eine leistungs- und verbrennungsoptimierende Gaszuführung zum Zylinderraum möglich.

Die Erfindung ist besonders wirkungsvoll einsetzbar, wenn das Saugrohr 14 in ein Primär- und ein Sekundärrohr unterteilt ist. Befinden sich der Walzendrehschieber 10 und der Flachschieber 15 in ihrer Auf-Stellung, wird über das Primär- und Sekundärrohr des Saugrohres 14 Gas zugeführt. Durch den in der Zu-Stellung befindlichen Flachschieber 15 wird neben dem Sekundärkanal 9 des Doppeleinlaßkanales 6 auch das Sekundärrohr des Saugrohres 14 verschlossen. Dem Primärkanal 8 wird dann nur noch Gas über das Primärrohr zugeführt, ohne daß durch Auftreffen von Gas auf den Flachschieber 15 Verwirbelungen auftreten, wie das der Fall wäre bei einem aus nur einer Kammer bestehendem Saugrohr 14. Durch diese erfindungsgemäße Ausführung des Gasführungssystems werden auch gasdynamische Vorgänge beeinflußt, indem je nach Stellung des Walzendrehschiebers 10 und des Flachschiebers 15 unterschiedliche Saugrohrquerschnittsflächen und -längen für die Gaszuführung genutzt werden. Das Primär- und Sekundärrohr des Saugrohres 14 können unterschiedliche Querschnitte und Längen aufweisen, wodurch eine dem jeweiligen Betriebszustand der Brennkraftmaschine optimal angepaßte Gaszuführung erfolgt. Die Auslegung des Primär- und Sekundärrohrs erfolgt im Hinblick auf verschiedene Resonanzdrehzahlen des Motors. Entweder ist nur das Primärrohr durchflutet oder die gasdynamischen Wirkungen beider Rohrabschnitte des Saugrohres 14 überlagern sich. Beides erfolgt jedoch unter optimierten Strömungsverhältnissen.

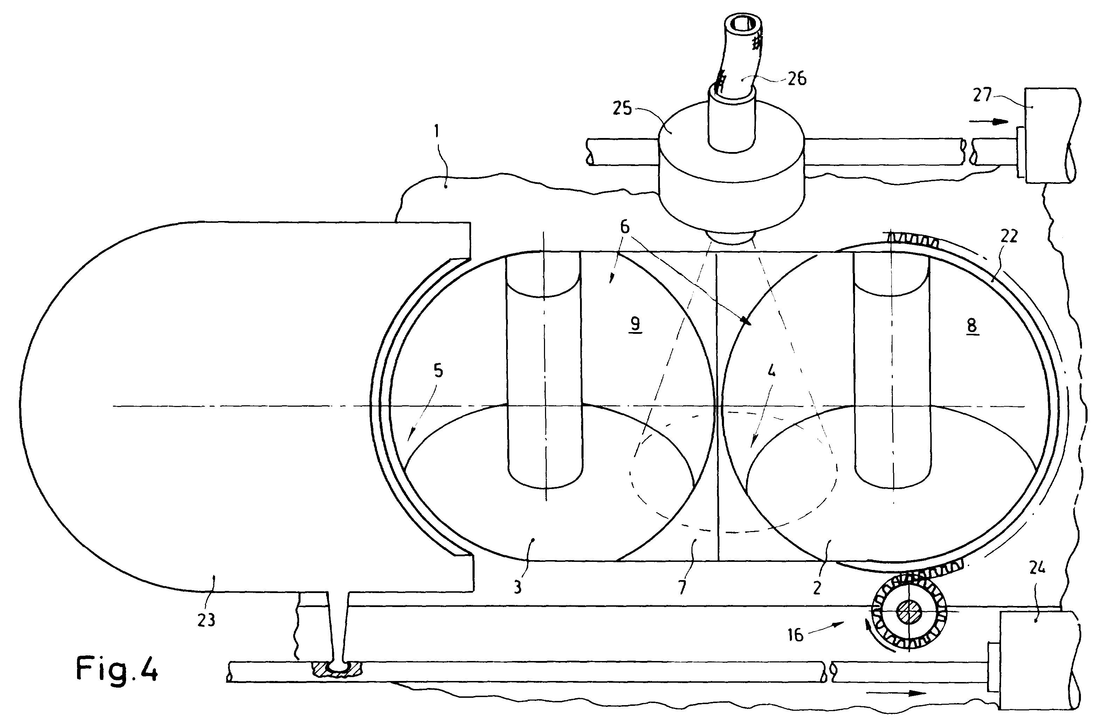

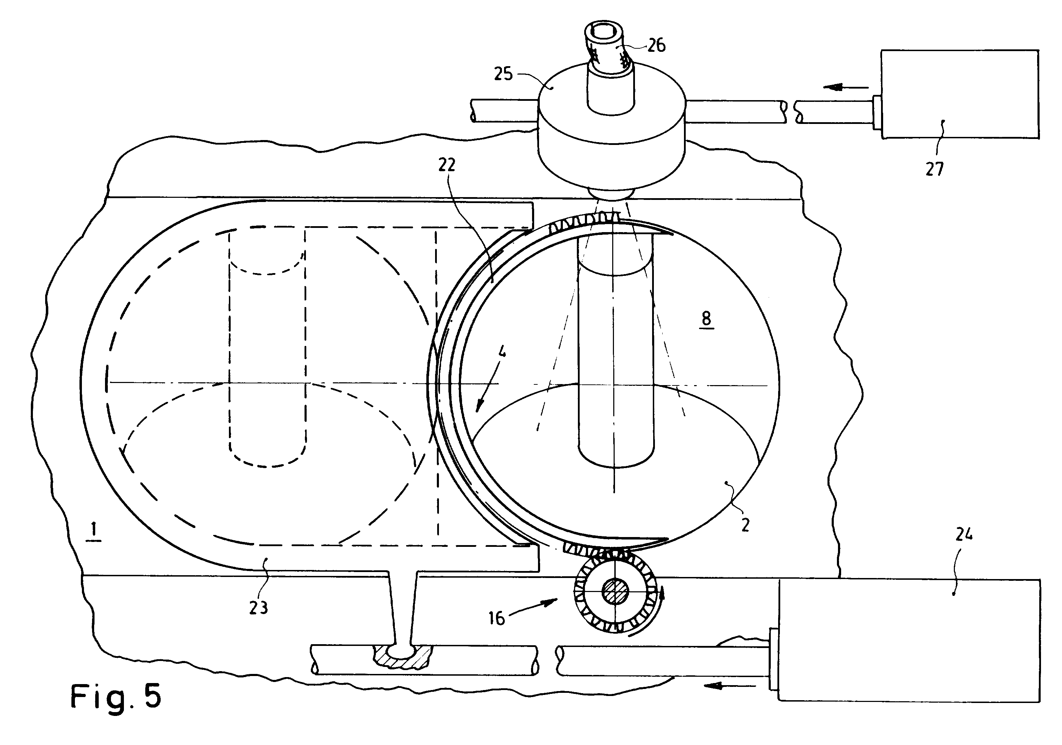

In einer zweiten, in den Figuren 4 und 5 gezeigten Ausführung der Erfindung ist die Brennkraftmaschine insbesondere als Otto-Motor ausgebildet. Ein Walzendrehschieber 22 ist ähnlich wie der Walzendrehschieber 10 ausgebildet. Ein Flachschieber 23 ist jedoch unabhängig von dem Walzendrehschieber 22 angeordnet, wobei auch dieser Flachschieber 23 die Aufgabe hat, den Sekundärkanal 9 zum Saugrohr 14 hin bedarfsweise zu verschließen. Dies kann bei in Auf- oder Zu-Stellung befindlichem Walzendrehschieber 22 erfolgen. Zu Bewegung des Flachschiebers 23 ist ein gesonderter Stellantrieb 24 vorgesehen, der wie der Stellmotor, über den jetzt nur noch der Walzendrehschieber 22 verdreht wird, von den Steuersignalen aktiviert wird. Somit sind vier Variationsmöglichkeiten gegeben:

| Nr. | Walzendrehschieber 22 | Flachschieber 23 |
|---|---|---|
| 1. | Auf-Stellung | Auf-Stellung |
| 2. | Auf-Stellung | Zu-Stellung |
| 3. | Zu-Stellung | Auf-Stellung |
| 4. | Zu-Stellung | Zu-Stellung |

- Variante 1:: Gas wird über den gesamten Querschnitt des Saugrohres 14 und des Doppeleinlaßkanals 6 zugeführt.
- Variante 2:: Gas wird nur über das Primärrohr des Saugrohres 14 in Richtung des Primärkanales 8 geleitet, wobei ein Nebenstrom auch dem Sekundärkanal 9 zugeführt wird.
- Variante 3:: Gas wird über den gesamten Saugrohrquerschnitt an den Primärkanal 8 und Sekundärkanal 9 weitergeleitet, wobei der Doppeleinlaßkanal 6 unsymmetrisch unterteilt ist.
- Variante 4:: Gas wird nur dem Primärkanal 8 zugeführt, wobei nur das Primärrohr des Saugrohres 14 genutzt wird.

Jede der möglichen Stellung des Walzendrehschiebers 22 und des Flachschiebers 23 ermöglicht eine optimale Gaszuführung bei bestimmten Betriebszuständen des Motors bzw. auch des Fahrzeugs. Dementsprechend werden der Walzendrehschieber 22 und der Flachschieber 23 angesteuert.

Bei dieser Ausbildung der Erfindung ist zusätzlich vorgesehen, eine Einspritzdüse 25 für Kraftstoff ortsveränderlich im Bereich des Doppeleinlaßkanals 6 anzuordnen. Die Einspritzdüse 25 ist mit einer flexiblen Zuleitung 26 zu versehen und ist entweder im Zentrum des Doppeleinlaßkanals 6 oder im Zentrum des Primärkanals 8 positionierbar. Befindet sich der Flachschieber 23 in der Zu-Stellung, wird Kraftstoff in das Zentrum des Primärkanals 8 eingespritzt. Bei in Auf-Stellung befindlichem Flachschieber 23 kann die Position der Einspritzdüse 25 frei vorgewählt werden. Es ist jedoch auch möglich, die Bewegung der Einspritzdüse 25 mit der des Flachschiebers 23 zu koppeln, so daß die Einspritzdüse 25 bei in Auf-Stellung befindlichen Flachschieber 23 immer zentral in den Doppeleinlaßkanal 6 einspritzt. Bei der in den Figuren gezeigten Ausführung ist die Position der Einspritzdüse 25 unabhängig von der des Flachschiebers 23 vorwählbar. Auch sie wird in Abhängigkeit von den genannten Steuersignalen über einen weiteren Stellantrieb 27 eingestellt.

Durch jede einstellbare Schieber- bzw. Einspritzdüsenstellung wird die Charakteristik der Gaszuführung und der Kraftstoffeinspritzung verändert, was eine Veränderung von Motorkennlinien, also des Lastverhaltens zur Folge hat. Somit ist durch die erfindungsgemäße Ausführung des Systems der Gaszuführung nahezu ständig ein Betrieb der Brennkraftmaschine im Bereich eines Optimums möglich.

## Patentansprüche

1. Brennkraftmaschine mit je einem in einem Zylinderkopf (1) vorgesehenen Doppeleinlaßkanal (6) für jeweils einem Zylinderraum zuzuführendes Gas, der in Verbindung mit einem Saugrohr (14) steht und der durch ein Trennelement im Bereich von zwei Einlaßöffnungen (4, 5) die von Einlaßventilen (2, 3) gesteuert geöffnet oder verschlossen werden, in einen Primärkanal (8) und einen Sekundärkanal (9) unterteilt ist, wobei in jedem Doppeleinlaßkanal (6) oder im Saugrohr (14) im Bereich der Verbindung zu dem Doppeleinlaßkanal (6) Mittel zur gesteuerten Verteilung des jedem Zylinderraum zuzuführenden Gases an den jeweiligen Primärkanal (8) bzw. Sekundärkanal (9) angeordnet sind, **dadurch gekennzeichnet**, daß die Querschnittsfläche jedes Doppeleinlaßkanales (6) über seine Länge annähernd konstant ist, jeder Doppeleinlaßkanal (6) den Einlaßöffnungen (4, 5) derart zugeordnet ist, daß an beiden Einlaßöffnungen (4, 5) annähernd gleiche Strömungsverhältnisse vorliegen und daß in jedem Doppeleinlaßkanal (6) ein Walzendrehschieber (10; 22) angeordnet ist, der in einer Auf-Stellung zur Mitte des Doppeleinlaßkanals (6) hin offen ist und die Wandungen des jeweiligen Doppeleinlaßkanales (6) bereichsweise nachbildet, ohne dabei die Strömungsverhältnisse im Doppeleinlaßkanal (6) wesentlich zu beeinflussen und der durch Drehung um eine etwa in Strömungsrichtung liegende Achse (11) in eine Zu-Stellung überführbar ist, in der er den Doppeleinlaßkanal (6) über nahezu seine gesamte Länge in den Primärkanal (8) und den Sekundärkanal (9) unterteilt, wobei der Sekundärkanal (9) durch ein Verschlußelement zum Saugrohr (14) hin zu öffnen oder zu verschließen ist.

2. Brennkraftmaschine mit je einem Doppeleinlaßkanal (6) für jeweils einem Zylinderraum zuzuführendes Gas nach Anspruch 1, **dadurch gekennzeichnet**, daß der Walzendrehschieber (10; 22) aus einem dünnwandigen Zylinderabschnitt besteht, dessen Querschnittsfläche von zwei Kreisbogenabschnitten mit gleichem Mittelpunkt begrenzt wird, wobei die Achse (11) des Walzendrehschiebers (10; 22) durch diesen Mittelpunkt verläuft.

3. Brennkraftmaschine mit je einem Doppeleinlaßkanal (6) für jeweils einem Zylinderraum zuzuführendes Gas nach Anspruch 1 oder 2, **dadurch gekennzeichnet**, daß der Walzendrehschieber (10; 22) in seinem den Einlaßöffnungen (4, 5) zugewandten Bereich eine Scheidewand enthält.

4. Brennkraftmaschine mit je einem Doppeleinlaßkanal (6) für jeweils einem Zylinderraum zuzuführendes Gas nach zumindest einem der Ansprüche 1 bis 3, **dadurch gekennzeichnet**, daß das Verschlußelement ein Flachschieber (15, 23) ist, durch den der von den Wandungen des Doppeleinlaßkanals (6) und von dem Walzendrehschieber (10; 22) begrenzte Sekundärkanal (9) vollständig zum Saugrohr (14) hin verschließbar ist und durch den der Doppeleinlaßkanal (6) vollständig zum Saugrohr (14) hin freigebbar ist, was durch Querverschiebung relativ zum Doppeleinlaßkanal (10; 22) erfolgt.

5. Brennkraftmaschine mit je einem Doppeleinlaßkanal (6) für jeweils einem Zylinderraum zuzuführendes Gas nach zumindest einem der Ansprüche 1 bis 4, **dadurch gekennzeichnet**, daß die Verdrehung des Walzendrehschiebers (10; 22) um seine Achse (11) und die Bewegung des Flachschiebers (15, 23) durch Aktionen von Stellmitteln, in Abhängigkeit von Betriebskennwerten der Brennkraftmaschine und/oder von Fahrzeugkennwerten erfolgt.

6. Brennkraftmaschine mit je einem Doppeleinlaßkanal (6) für jeweils einem Zylinderraum zuzuführendes Gas nach zumindest einem der Ansprüche 1 bis 5, **dadurch gekennzeichnet**, daß der Flachschieber (15) fest, eine Baueinheit bildend oder getriebetechnisch über die Stellmittel (16) mit dem Walzendrehschieber (10) verbunden ist und gleichzeitig mit der Drehung des Walzendrehschiebers (10) um seine Achse (11) relativ zum Doppeleinlaßkanal (6) verschiebbar ist.

7. Brennkraftmaschine mit je einem Doppeleinlaßkanal (6) für jeweils einem Zylinderraum zuzuführendes Gas nach Anspruch 6, **dadurch gekennzeichnet**, daß die Stellmittel (16) einen Stellmotor beinhalten, der getriebetechnisch mit dem Flachschieber (15) und/oder dem Walzendrehschieber (10) in Verbindung steht und durch dessen Kraft die Verdrehung des Walzendrehschiebers (10) und die Verschiebung des Flachschiebers (15) erfolgt, wenn den Stellmotor steuernde Signale bestimmte Betriebszustände der Brennkraftmaschine und/oder bestimmte Fahrzeugkennwerte signalisieren.

8. Brennkraftmaschine mit je einem Doppeleinlaßkanal (6) für jeweils einem Zylinderraum zuzuführendes Gas nach zumindest einem der Ansprüche 1 bis 5, **dadurch gekennzeichnet**, daß der Walzendrehschieber (22) und der Flachschieber (23) mit voneinander unabhängig ansteuerbaren Stellmitteln gekoppelt sind und somit der Verschluß des Sekundärkanals (9) durch den Flachschieber (23) gleichzeitig oder nicht gleichzeitig mit der Unterteilung des Doppeleinlaßkanales (6) in den Primärkanal (8) und den Sekundärkanal (9) durch den Walzendrehschieber (22) erfolgt.

9. Brennkraftmaschine mit je einem Doppeleinlaßkanal (6) für jeweils einem Zylinderraum zuzuführendes Gas nach Anspruch 8, **dadurch gekennzeichnet**, daß die Stellmittel Stellantriebe (24) beinhalten, wobei ein Stellmotor in direkter oder getriebetechnischer Verbindung mit dem Walzendrehschieber (22) steht, ein Stellantrieb (24) in direkter oder getriebetechnischer Verbindung mit dem Flachschieber (23) steht und beide Stellantriebe (24) unabhängig voneinander durch Signale gesteuert werden, die sich aus bestimmten Betriebszuständen der Brennkraftmaschine und/oder aus Fahrzeugkennwerten ergeben.

10. Brennkraftmaschine mit je einem Doppeleinlaßkanal (6) für jeweils einem Zylinderraum zuzuführendes Gas nach einem der Ansprüche 1 bis 9, **dadurch gekennzeichnet**, daß das Saugrohr (14) ganz oder teilweise in zwei Rohrabschnitte unterteilt ist, die dem Primärkanal (8) und dem Sekundärkanal (9) des Doppeleinlaßkanales (6) zugeordnet und gleich oder unterschiedlich ausgebildet sind.

11. Brennkraftmaschine mit je einem Doppeleinlaßkanal (6) für jeweils einem Zylinderraum zuzuführendes Gas nach zumindest einem der Ansprüche 1 bis 10, **dadurch gekennzeichnet**, daß die Brennkraftmaschine ein Otto-Motor ist und Kraftstoff gesteuert über je eine Einspritzdüse (25) in jeden Doppeleinlaßkanal (6) eingespritzt wird, wobei die einzelnen Einspritzdüsen (25) ortsveränderlich im Bereich der Doppeleinlaßkanäle (6) angeordnet sind und aus einer Position zur zentralen Einspritzung in den Doppeleinlaßkanal (6) in eine Position zur zentralen Einspritzung in den Primärkanal (8) und umgekehrt überführbar sind, wobei diese Bewegungen abhängig oder unabhängig von Bewegungen des Flachschiebers (23) erfolgen können.

## Claims

1. Internal combustion engine with in each case a double inlet channel (6) provided in a cylinder head (1) for gas to be supplied to a cylinder chamber, which communicates with an intake pipe (14) and which is divided into a primary channel (8) and a secondary channel (9) by a separating element in the region of two inlet openings (4, 5) which are opened or closed in controlled fashion by inlet valves (2, 3), wherein in each double inlet channel (6) or in the intake pipe (14) in the region of the connection with the double inlet channel (6) are arranged means for controlled distribution of the gas to be supplied to each cylinder chamber to the respective primary channel (8) or secondary channel (9), characterised in that the cross-sectional area of each double inlet channel (6) is approximately constant over its length, each double inlet channel (6) is associated with the inlet openings (4, 5) in such a way that approximately the same flow conditions occur at the two inlet openings (4, 5) and in that in each double inlet channel (6) is arranged a rotary roller slide valve (10; 22) which in an open position opens towards the centre of the double inlet channel (6) and in certain regions simulates the walls of the respective double inlet channel (6) without substantially influencing the flow conditions in the double inlet channel (6) in the process, and which by rotation about an axis (11) lying more or less in the direction of flow can be transferred to a closed position in which it divides the double inlet channel (6) over nearly its whole length into the primary channel (8) and the secondary channel (9), wherein the secondary channel (9) can be opened or closed towards the intake pipe (14) by a closure element.

2. Internal combustion engine with in each case a double inlet channel (6) for gas to be supplied to a cylinder chamber according to claim 1, characterised in that the rotary roller slide valve (10; 22) consists of a thinwalled cylinder section of which the cross-sectional area is defined by two arc sections with the same centre, wherein the axis (11) of the rotary roller slide valve (10; 22) passes through this centre.

3. Internal combustion engine with in each case a double inlet channel (6) for gas to be supplied to a cylinder chamber according to claim 1 or 2, characterised in that the rotary roller slide valve (10; 22) contains a partition wall in its region facing towards the inlet openings (4, 5).

4. Internal combustion engine with in each case a double inlet channel (6) for gas to be supplied to a cylinder chamber according to one or more of claims 1 to 3, characterised in that the closure element is a flat slide valve (15, 23) by which the secondary channel (9) defined by the walls of the double inlet channel (6) and by the rotary roller slide valve (10; 22) can be completely closed off from the intake pipe (14) and by which the double inlet channel (6) can be completely opened towards the intake pipe (14), which takes place by transverse displacement relative to the double inlet channel (10; 22).

5. Internal combustion engine with in each case a double inlet channel (6) for gas to be supplied to a cylinder chamber according to one or more of claims 1 to 4, characterised in that rotation of the rotary roller slide valve (10; 22) about its axis (11) and movement of the flat slide valve (15, 23) take place by actions of actuating means, as a function of operating characteristic values of the engine and/or of characteristic values of the vehicle.

6. Internal combustion engine with in each case a double inlet channel (6) for gas to be supplied to a cylinder chamber according to one or more of claims 1 to 5, characterised in that the flat slide valve (15) is connected to the rotary roller slide valve (10) rigidly, forming a structural unit, or by gearing techniques by the actuating means (16), and at the same time as rotation of the rotary roller slide valve (10) about its axis (11) is slidable relative to the double inlet channel (6).

7. Internal combustion engine with in each case a double inlet channel (6) for gas to be supplied to a cylinder chamber according to claim 6, characterised in that the actuating means (16) contain a servo motor which is connected by gearing techniques to the flat slide valve (15) and/or the rotary roller slide valve (10), and by whose force rotation of the rotary roller slide valve (10) and displacement of the flat slide valve (15) take place when signals controlling the servo motor signal certain operating conditions of the engine and/or certain characteristic values of the vehicle.

8. Internal combustion engine with in each case a double inlet channel (6) for gas to be supplied to a cylinder chamber according to one or more of claims 1 to 5, characterised in that the rotary roller slide valve (22) and the flat slide valve (23) are coupled to actuating means which can be driven independently of each other and hence closure of the secondary channel (9) by the flat slide valve (23) takes place simultaneously or non-simultaneously with division of the double inlet channel (6) into the primary channel (8) and the secondary channel (9) by the rotary roller slide valve (22).

9. Internal combustion engine with in each case a double inlet channel (6) for gas to be supplied to a cylinder chamber according to claim 8, characterised in that the actuating means contain servo drives (24), wherein a servo motor is connected directly or by gearing techniques to the rotary roller slide valve (22), a servo drive (24) is connected directly or by gearing techniques to the flat slide valve (23), and the two servo drives (24) are controlled independently of each other by signals which result from certain operating conditions of the engine and/or from characteristic values of the vehicle.

10. Internal combustion engine with in each case a double inlet channel (6) for gas to be supplied to a cylinder chamber according to any of claims 1 to 9, characterised in that the intake pipe (14) is completely or partially divided into two pipe sections which are associated with the primary channel (8) and the secondary channel (9) of the double inlet channel (6) and have the same or a different construction.

11. Internal combustion engine with in each case a double inlet channel (6) for gas to be supplied to a cylinder chamber according to one or more of claims 1 to 10, characterised in that the engine is an Otto engine and fuel is injected in controlled fashion into each double inlet channel (6) via an injection nozzle (25) each, wherein the individual injection nozzles (25) are arranged movably in the region of the double inlet channels (6) and can be transferred from a position for central injection into the double inlet channel (6) into a position for central injection into the primary channel (8) and vice versa, wherein these movements can take place as a function of or independently of movements of the flat slide valve (23).

## Revendications

1. Moteur à combustion interne avec, associé à chaque cylindre, un canal d'admission (6) double aménagé dans une culasse (1), pour du gaz à introduire dans le cylindre, lequel canal communique avec un conduit d'aspiration (14) et, dans la région de deux orifices d'admission (4, 5) qui sont ouverts et fermés de manière contrôlée par des soupapes d'admission (2, 3), est divisé en un canal primaire (8) et un canal secondaire (9) par un élément de séparation, des moyens étant disposés dans chaque canal d'admission (6) double ou dans le conduit d'aspiration (14), dans la région du raccordement au canal d'admission (6) double, pour répartir de manière contrôlée entre le canal primaire (8) et le canal secondaire (9) le gaz à introduire dans chaque cylindre, caractérisé par le fait que la surface en section de chaque canal d'admission (6) double est constante sur toute la longueur dudit canal, que chaque canal d'admission (6) double est associé aux orifices d'admission (4, 5) de telle sorte qu'il existe des conditions d'écoulement sensiblement identiques au niveau des deux orifices d'admission (4, 5) et qu'un tiroir rotatif à cylindre (10; 22) est disposé dans chaque canal d'admission (6) double, lequel tiroir rotatif à cylindre (10; 22), dans une position ouverte, est ouvert en direction du milieu du canal d'admission (6) double et épouse localement les parois dudit canal (6), sans modifier de manière significative les conditions d'écoulement à l'intérieur de celui-ci, et peut être amené, par rotation autour d'un axe orienté sensiblement dans la direction d'écoulement, dans une position fermée, dans laquelle il divise le canal d'admission (6) double, sur la quasi-totalité de sa longueur, en un canal primaire (8) et un canal secondaire (9), le canal secondaire (9) pouvant être ouvert ou fermé, côté conduit d'aspiration (14), par un élément d'obturation.

2. Moteur à combustion interne avec, associé à chaque cylindre, un canal d'admission (6) double pour du gaz à introduire dans le cylindre, selon la revendication 1, caractérisé par le fait que le tiroir rotatif à cylindre (10; 22) est constitué par un tronçon de cylindre à paroi mince dont la surface est délimitée par deux tronçons en arc de cercle ayant même centre, l'axe (11) du tiroir rotatif à cylindre (10; 22) passant par ce centre.

3. Moteur à combustion interne avec, associé à chaque cylindre, un canal d'admission (6) double pour du gaz à introduire dans le cylindre, selon la revendication 1 ou 2, caractérisé par le fait que le tiroir rotatif à cylindre (10; 22) comporte une paroi de séparation dans sa partie tournée vers les orifices d'admission (4,5).

4. Moteur à combustion interne avec, associé à chaque cylindre, un canal d'admission (6) double pour du gaz à introduire dans le cylindre, selon au moins une des revendications 1 à 3, caractérisé par le fait que l'élément d'obturation est un tiroir plan (15, 23) au moyen duquel le canal secondaire (9) délimité par les parois du canal d'admission (6) double et du tiroir rotatif à cylindre (10, 22) peut être complètement obturé côté conduit d'aspiration (14) et le canal d'admission (6) double complètement ouvert côté conduit d'aspiration (14), ceci étant obtenu par déplacement transversal par rapport au canal d'admission (6) double.

5. Moteur à combustion interne avec, associé à chaque cylindre, un canal d'admission (6) double pour du gaz à introduire dans le cylindre, selon au moins une des revendications 1 à 4, caractérisé par le fait que la rotation du tiroir rotatif à cylindre (10, 22) autour de son axe (11) et le déplacement du tiroir plan (15, 23) ont lieu par des actions de moyens de commande en fonction de paramètres de fonctionnement du moteur à combustion interne et/ou de paramètres du véhicule.

6. Moteur à combustion interne avec, associé à chaque cylindre, un canal d'admission (6) double pour du gaz à introduire dans le cylindre, selon au moins une des revendications 1 à 5, caractérisé par le fait que le tiroir plan (15) est lié de manière fixe, en un module de construction, ou par l'intermédiaire des moyens de commande (16) au tiroir rotatif à cylindre (10, 22) et est déplacé par rapport au canal d'admission (6) double en même temps que se produit la rotation du tiroir rotatif (10, 22) à cylindre autour de son axe.

7. Moteur à combustion interne avec, associé à chaque cylindre, un canal d'admission (6) double pour du gaz à introduire dans le cylindre, selon la revendication 6, caractérisé par le fait que les moyens de commande (16) comprennent un moteur qui est couplé par un mécanisme au tiroir plan (15) et/ou au tiroir rotatif à cylindre (10) et dont la force en gendre la rotation du tiroir rotatif à cylindre (10) ainsi que le déplacement du tiroir plan (15) lorsque des signaux de commande du moteur signalent certains états de fonctionnement du moteur et/ou certains paramètres du véhicule.

8. Moteur à combustion interne avec, associé à chaque cylindre, un canal d'admission (6) double pour du gaz à introduire dans le cylindre, selon au moins une des revendications 1 à 5, caractérisé par le fait que le tiroir rotatif (22) à cylindre et le tiroir plan (23) sont couplés à des moyens de commande qui peuvent être actionnés indépendamment l'un de l'autre et qu'ainsi, la fermeture du canal secondaire (9) par le tiroir plan (23) a lieu en même temps ou non que la division du canal d'admission (6) double par le tiroir rotatif à cylindre (22) en un canal primaire (8) et un canal secondaire (9).

9. Moteur à combustion interne avec, associé à chaque cylindre, un canal d'admission (6) double pour du gaz à introduire dans le cylindre, selon la revendication 8, caractérisé par le fait que les moyens de commande (16) comprennent des mécanismes d'entraînement (24), un moteur de commande étant couplé directement ou par un mécanisme au tiroir rotatif à cylindre (22), un mécanisme d'entraînement (24) étant couplé directement ou par un mécanisme au tiroir plan (23) et les deux mécanismes étant commandés indépendamment l'un de l'autre par des signaux résultant d'états de fonctionnement donnés du moteur à combustion interne et/ou de paramètres du véhicule.

10. Moteur à combustion interne avec, associé à chaque cylindre, un canal d'admission (6) double pour du gaz à introduire dans le cylindre, selon au moins une des revendications 1 à 9, caractérisé par le fait que le conduit d'admission (14) est totalement ou partiellement divisé en deux tronçons de conduit qui sont associés au canal primaire (8) et au canal secondaire (9) de canal d'admission (6) double et présentent un agencement identique ou différent.

11. Moteur à combustion interne avec, associé à chaque cylindre, un canal d'admission (6) double pour du gaz à introduire dans le cylindre, selon au moins une des revendications 1 à 10, caractérisé par le fait que le moteur à combustion interne est un moteur à allumage commandé et que le combustible est injecté de manière contrôlée chaque fois par un injecteur (25) placé dans chaque canal d'admission (6) double, les différents injecteurs (25) étant montés de manière mobile dans la région des canaux d'admission (6) doubles et pouvant être déplacés d'une position pour l'injection centrale dans le canal d'admission (6) double vers une position pour l'injection centrale dans le canal primaire (8) et inversement, les déplacements ayant lieu indépendamment ou non des déplacements du tiroir plan (23).
